# EUROPÄISCHE PATENTSCHRIFT

(11) **EP 3 750 299 B1**
(45) Veröffentlichungstag und Bekanntmachung des Hinweises auf die Patenterteilung: **22.09.2021**
(21) Anmeldenummer: 18815621.0
(22) Anmeldetag: 04.12.2018
(51) Int. Cl.: H04M 15/00, H04W 4/24

(54) **KOMMUNIKATIONSVERFAHREN UND KOMMUNIKATIONSSYSTEM**
COMMUNICATION METHOD AND COMMUNICATION SYSTEM
PROCÉDÉ DE COMMUNICATION ET SYSTÈME DE COMMUNICATION

(30) Priorität: 05.02.2018 EP 18155030
(43) Veröffentlichungstag der Anmeldung: 16.12.2020
(73) Patentinhaber: Schweizerische Bundesbahnen SBB, 3000 Bern 65 (CH)
(72) Erfinder: FÖRSTER, Markus, 4105 Biel-Benken (BL) (CH)
(74) Vertreter: Rutz & Partner
(86) Internationale Anmeldenummer: PCT/EP2018/083524
(87) Internationale Veröffentlichungsnummer: WO 2019/149407

(56) Entgegenhaltungen:
- WO-A1-2015/041580
- US-A1- 2004 258 031

## Beschreibung

Die Erfindung betrifft ein Kommunikationsverfahren und ein Kommunikationssystem, mittels dessen Anwendern von Mobilendgeräten Kommunikationsdienste zur Verfügung gestellt werden.

Moderne Kommunikationsnetze erlauben es Teilnehmern bzw. Anwendern, an beliebigen Orten von ihren Mobilendgeräten Sprachverbindungen oder Datenverbindungen über ein Mobilfunknetz, das z.B. nach dem GSM-Standard oder dafür vorgesehenen Erweiterungsstandards arbeitet, zu weiteren Endgeräten aufzubauen, die direkt oder indirekt an das Mobilfunknetz angeschlossen sind.

Gemäss Faktenblatt GSM, Bundesamt für Kommunikation BAKOM, Juni 2015, Bern, war das GSM-System ursprünglich für den mobilen Sprachtelefoniedienst ausgelegt. Später wurde der GSM-Standard mit neuen Funktionalitäten wie HSCSD (High Speed Circuit Switched Data), GPRS (General Packet Radio Service) und EDGE (Enhanced Data rates for GSM Evolution) oder LTE (Long Term Evolution) erweitert.

Aus der EP2023674A1, sind Verfahren für die Mobilitätsverwaltung von Mobilendgeräten in einem Mobilfunknetz bekannt, mittels denen Handover-Probleme bei Mobilendgeräten, die in einem Fahrzeug mitgeführt werden, vermieden werden können. Mobilendgeräte können daher auch in hoher Anzahl effizient in Fahrzeugen genutzt werden, ohne dass mit Störungen zu rechnen ist. Aus der EP2631152A1 ist ein Verfahren zur Ortung von Mobilendgeräten in einem Mobilfunknetz und zur Verwaltung des Rollmaterials in einem Eisenbahnnetz bekannt.

In öffentlichen Gebäuden oder Plätzen können Mobilendgeräte oft über drahtlose Netzwerke (WLAN Wireless Local Area Networks) kostenlos mit dem Internet verbunden werden.

Faktenblatt WLAN, Bundesamt für Kommunikation BAKOM, März 2017, Bern, beschreibt WLAN-Technologien und Standards. Typischerweise kommt der IEEE 802.11 Standard zur Anwendung. Für kurze Distanzen und den Aufbau von adhoc Netzwerken kommt regelmässig auch der Bluetooth Standard IEEE 802.15.1 zur Anwendung.

In öffentlichen Gebäuden und Fahrzeugen wird Besuchern, Gästen und Kunden von einem Gastgeber oft kostenloser Zutritt zu diesen Kommunikationsdiensten gewährt. Der Begriff »Gastgeber« bzw. »Host« (engl.) umfasst z.B. staatliche Organisationen, Betreiber von öffentlichen Verkehrsmitteln, Inhaber von Geschäftshäusern, Gasthäusern, Sportanlagen oder Bürokomplexen, etc..

Der Betrieb solcher WLAN-Netze hat für Betreiber und Anwender Vorteile und Nachteile. Für Betreiber stehen kostengünstige WLAN-Technologien und kostengünstige Internetzugänge zur Verfügung. Nach Erhalt eines Passworts kann der Anwender das WLAN-Angebot kostenlos nutzen.

Nachteilig ist, dass der Betreiber bzw. Anbieter von Kommunikationsdiensten während der gesamten Aufenthaltsdauer des Anwenders und im gesamten Aufenthaltsraum dafür sorgen muss, dass der Anwender Zugang zum WLAN hat. In grossen Räumen oder räumlichen Anlagen und Gebäudekomplexen, insbesondere auch in Eisenbahnzügen, muss der Betreiber daher entsprechend aufwändige Installationen und Wartungsarbeiten vornehmen. Aus der Sicht des Anwenders resultiert oft nicht die Verbindungsqualität, welche er von seinem eigenen Service-Provider gewohnt ist. Die Datenübertragungsrate kann zu gering sein oder die Netzabdeckung kann ungenügend sein. Die Datenübertragungsrate sinkt dabei typischerweise mit der Anzahl der an das WLAN eingekoppelten Mobilendgeräte.

Der Anwender muss sich daher auf die Lösung des Betreibers oder Hosts verlassen, die normalerweise hinsichtlich der Kosten und nicht hinsichtlich der Qualität optimiert ist. Das Auftreten technischer Problemen ist dabei beidseitig unbefriedigend. Der Host muss mit Störungsmeldungen und Beanstandungen rechnen, welche das Gesamtpaket seiner Dienstleistungen beeinträchtigt. Der Anwender, der Kommunikationsdienste benötigt, kann unter Umständen seine Arbeiten und Geschäfte nicht effizient ausführen.

Der vorliegenden Erfindung liegt daher die Aufgabe zugrunde, ein verbessertes Kommunikationsverfahren und ein verbessertes Kommunikationssystem anzugeben.

Die WO2015041580A1 betrifft eine Schnittstelleneinheit für ein Telekommunikationsnetz, mittels der Gutscheine eines Teilnehmers, die fremden Netzen zugeordnet sind, auf das Konto des Teilnehmers in seinem Heimatsnetz übertragen werden können.

Das Kommunikationsverfahren und das Kommunikationssystem sollen es einem Gastgeber bzw. Host erlauben, Gästen bzw. Anwendern mit einem Mobilendgerät einen kostenlosen oder vergünstigten Zugang zu Kommunikationsdiensten zu gewähren, ohne dass die oben genannten Nachteile auftreten. Anwender sollen Kommunikationsdienste uneingeschränkt in der von ihnen gewohnten Qualität und unabhängig von der Anzahl der weiteren aktiven Mobilendgeräte nutzen können. Beim Betrieb des Kommunikationssystems soll der Host nicht mit technischen Fragen und Störungsmeldungen konfrontiert werden.

Das erfindungsgemässe Kommunikationssystem soll einfach aufgebaut sein und mit geringem Aufwand implementiert werden können. Aufwändige Installationen sollen vermieden werden können. Weiterhin sollen Verbesserungen vorgeschlagen werden, die bei der Überarbeitung öffentlicher Kommunikationssysteme und deren Protokolle vorteilhaft berücksichtigt werden können.

Diese Aufgabe wird mit einem Verfahren und einem Kommunikationsverfahren und einem Kommunikationssystem gelöst, welche die in Anspruch 1 bzw. 13 angegebenen Merkmale aufweisen. Vorteilhafte Ausgestaltungen der Erfindung sind in weiteren Ansprüchen angegeben.

Das Kommunikationsverfahren und das Kommunikationssystem sind für wenigstens ein Mobilendgerät eines Anwenders vorgesehen, das zum Aufbau von Datenverbindungen oder Gesprächsverbindungen über wenigstens ein mobiles Kommunikationsnetz zu einem Datenendgerät oder einem Sprachendgerät geeignet ist und das zur drahtlosen Kommunikation mit einem Hostserver eines Hosts geeignet ist. Obwohl die Nutzung des erfindungsgemässen Kommunikationssystems nachstehend exemplarisch mit Bezug auf ein Mobilendgerät erläutert wird, kann das Kommunikationssystem von einer beliebigen Anzahl von Mobilendgeräten unterschiedlicher Art, wie Smart Phones, Tablets, Notebooks, etc., genutzt werden.

Z.B. können Mobilendgeräte von Reisenden in einem Eisenbahnzug, Mobilendgeräte von Besuchern einer Gaststätte, einer Messe, eines Bürogebäudes, eines Sportanlasses oder eines öffentlichen Gebäudes das erfindungsgemässe Kommunikationssystem uneingeschränkt nutzen.

### Erfindungsgemäss,

a) wird zwischen dem Hostserver und dem Mobilendgerät eine drahtlose Kommunikationsverbindung erstellt, über die Identifikationsdaten vom Mobilendgerät zum Hostserver übertragen werden;
b) erstellt der Hostserver einen Voucher oder Gutschein, in dem wenigstens ganz oder teilweise die Identifikationsdaten und eine Zeitdauer sowie vorzugsweise eine Kennung des Hostservers registriert sind;
c) wird der Voucher an den Betreiber des mobilen Kommunikationsnetzes (nachstehend Netzbetreiber) oder an einen Service-Provider übertragen, der für das Mobilendgerät die Gebührenabrechnung erstellt; und
d) belastet der Betreiber des mobilen Kommunikationsnetzes oder der Service-Provider anhand des Vouchers Kommunikationskosten für Datenverbindungen oder Gesprächsverbindungen des Mobilendgeräts, die während der im Voucher angegebenen Zeitdauer registriert wurden, einem der Kennung des Hostservers zugeordneten Konto.

Das erfindungsgemässe Kommunikationssystem erlaubte somit einem Host oder Gastgeber, beliebigen Anwendern von Mobilendgeräten, z.B. Gästen, insbesondere Fahrgästen, Geschäftspartnern, Kunden, Personal oder Besuchern, kostenlos oder mit reduzierten Kosten Zugang zu Kommunikationsdienstleistungen zu gewähren. Die Kommunikationskosten werden ganz oder teilweise vom Host getragen, der dafür vorteilhafte Konditionen mit den Serviceprovidern aushandelt.

Die Anwender können weiter die Kommunikationsdienste ihrer Provider nutzen, während die Kosten vom Host getragen werden. In den verschiedenen Ausgestaltungen der Erfindung resultiert ein geringer Hardwareaufwand für den Host. In besonders vorteilhaften Ausgestaltungen der Erfindung kann auf die Installation von drahtlosen Netzwerken vollständig verzichtet werden. Stattdessen werden Funkbaken oder Beacon installiert, die lediglich eine Kennung aussenden, jedoch nicht mit den Mobilendgeräten bidirektional kommunizieren. Der Host kann daher die erforderliche Anzahl von Funkbaken zu Minimalkosten in seinem Gebäude, Areal oder Verkehrsmitteln installieren, wonach keine weiteren Hardware-Aufwendungen erforderlich sind.

Die Anwender können sich mit geringem Aufwand beim Host anmelden und können in der Folge wie gewohnt über ihr Mobilendgerät kommunizieren, während die Kosten dem Host belastet werden. Die Anmeldung mit Übertragung der Identifikationsdaten erfolgt vom Anwender initialisiert oder vorzugsweise automatisch, sodass jeglicher Aufwand für den Anwender entfällt. Lediglich die einmalige Installation einer Anwendung bzw. Applikation (Software-App) ist erforderlich, über die ein Datenaustausch mit einer Anwendung erfolgt, die im Hostserver installiert ist. Die kurze Kommunikation zwischen der Anwendung im Mobilendgerät und der Anwendung im Hostserver kann über beliebige drahtlose Kommunikationsnetze, die ein WLAN oder das öffentliche Mobilfunknetz erfolgen.

Der Anwender kann die Anwendung z.B. über das Mobilfunknetz von den Internetseiten des Hosts herunterladen und auf seinem Mobilendgerät installieren. In der Folge kann er über die installierte Anwendung mit dem Hostserver kommunizieren. Vorzugsweise registriert sich der Anwender bei der ersten Kontaktaufnahme beim Host und überträgt diesem seine Identifikationsdaten, wie die IMSI. Bei der späteren Nutzung der Kommunikationsdienste hat der Host somit eine Kontrolle über die Nutzer, die von seinem Angebot profitieren. Besonders einfach gelingt dieser Vorgang, wenn der Anwender bereits eine andere Anwendung bzw. Applikation des Hosts nutzt und für diese bereits seine Identifikationsdaten hinterlegt hat.

Die Erfindung, die in verschiedenen vorteilhaften Ausgestaltungen realisiert werden kann, hat zahlreiche weitere Vorteile.

Durch die Implementierung der vom Host zur Verfügung gestellten Anwendung im Mobilendgerät kann ein erweiterter Datenaustausch zwischen dem Host und den Anwendern erfolgen, der für die gesicherte Erstellung der Voucher oder für weitere Zwecke nutzbar ist.

Der Host kann auf der Anwendung aktuelle Angebote und Informationen präsentieren. Fahrzeuginsassen in einem Eisenbahnzug können aktuelle Reiseinformationen, wie erwartete Verspätungen, oder auch Angebote, z.B. Angebote des Speisewagens oder Angebote von Dienstleistern am Zielort, übermittelt werden. In einem Kaufhaus können besondere Aktionen an die Anwendungen übermittelt werden. In einer Sportarena können aktuelle Sportergebnisse und Hintergrundinformation zu Transportmöglichkeiten nach Beendigung des Anlasses kommuniziert werden.

Interaktionen zwischen dem Host und den Anwendern können gefördert werden, sodass eine stärkere Kundenbindung resultiert. Mittels den Anwendungen können z.B. Einkäufe registriert werden, die bei der Vergabe der Voucher bzw. bei der Berechnung der Zeitdauer vorteilhaft berücksichtigt werden können, während der die Mobilendgeräten kostenfrei genutzt werden können. Der Betreiber eines Verkehrsnetzes kann regelmässigen Nutzern von Transportdienstleistungen erweiterte Voucher zuteilen.

Die erfindungsgemäss in den Mobilendgeräten installierten Anwendungen können vorteilhaft mit weiteren Anwendungen Daten austauschen, die für die Ausstellung des Vouchers berücksichtigt werden oder die dem Anwender einen zusätzlichen Nutzen liefern. In vorzugsweisen Ausgestaltungen ist das elektronische Ticketing mit den erfindungsgemäss in den Mobilendgeräten installierten Anwendungen gekoppelt. D. h., ein Voucher wird erst nach Prüfung der Mitfahrberechtigung durch den Hostserver an einen Fahrgast bzw. dessen Mobilendgerät ausgegeben. Die Fahrgäste sind daher motiviert, ihre Mitfahrberechtigungen während der Fahrt elektronisch prüfen zu lassen, um kostenlosen Zutritt zu den Kommunikationsdiensten zu erhalten. Die Präsentation der elektronischen Fahrscheine ist daher nicht mehr eine Pflicht, sondern ein wünschenswerter Vorgang. Der Kontrollvorgang durch den Bahnbetreiber wird dadurch erleichtert.

Vorzugsweise können die in den Mobilendgeräten implementierten Anwendungen auch auf Parameter in den Mobilendgeräten zugreifen, die für den Verbindungsaufbau mit dem Mobilfunknetz verwendbar sind. Beispielsweise kann die geforderte Verbindungsqualität (QoS) auf einen vom Host vorgegebenen Wert eingestellt werden. Auf diese Weise kann der Host seine Kosten limitieren.

Vorzugsweise erfolgt eine wiederholte Abfrage der Identifikationsdaten, vorzugsweise zu Beginn und am Ende der Zeitdauer, während der ein kostenloser Zugang zu Kommunikationsdienstleistungen gewährt wird. Vorteilhaft kann diese Abfrage oder Prüfung bei Betreten und Verlassen eines dem Hostserver zugeordneten Raumes, z.B. bei Betreten eines Eisenbahnzuges und nach Erreichen des Zielorts bei Verlassen des Eisenbahnzuges. Bei der Verwendung von Funkbaken kann periodisch deren Identifikation zum Hostserver übertragen werden. Die Identifikation der Funkbaken kann in einer für den Hostserver bekannten Weise auch umgeschaltet werden, sodass bei jeder Abfrage eine andere Identifikation zum Hostserver übertragen wird. Auf diese Weise wird sichergestellt, dass der Anwender während der Zeitdauer, während der er kostenlosen Zugang zu Kommunikationsdienstleistungen erhält, tatsächlich die Dienstleistungen des Hosts nutzt und/oder im Dienstbereich des Hosts anwesend ist.

Die Zeitdauer, während der kostenloser Zugang zu Kommunikationsdiensten gewährt wird, kann somit vorteilhaft entsprechend der Zeitdauer zwischen dem Anmelden des Mobilendgeräts, vorzugsweise beim Betreten des dem Hostserver zugeordneten Raumes, und dem Abmelden des Mobilendgeräts, vorzugsweise beim Verlassen des dem Hostserver zugeordneten Raumes, festlegt werden.

Alternativ kann die Zeitdauer, während der kostenloser Zugang zu Kommunikationsdiensten gewährt wird, entsprechend der Zeitdauer einer Servicedienstleistung festlegt werden, die vom Anwender in Anspruch genommen wird. Diese Zeitdauer kann z.B. aus einem elektronischen Kalender oder einem Reglement betreffend die Öffnungszeiten eines Gebäudes übernommen werden. Sofern Besucher eines Hotels einen Aufenthalt für einige Tage reserviert haben, so kann diese Zeitdauer für den Zugang zu den Kommunikationsdienstleistungen entsprechend übernommen werden. Der Hostserver eines Verkehrsbetriebs, eines Busbetriebs oder eines Eisenbahnbetriebs, kann die Zeitdauer aus einem elektronischen Fahrplan entnehmen bzw. von einem Fahrplanrechner abrufen, der gegebenenfalls Verspätungen berücksichtigt.

Die Zeitdauer kann auch unter Berücksichtigung von Präsenzzeiten festlegt werden, die für den Anwender des Mobilendgeräts gespeichert sind. Ein Arbeitgeber kann die Kommunikationskosten für die Zeitdauer der Arbeitszeiten der Mitarbeiter übernehmen.

Das Kommunikationssystem umfasst den Hostserver und die angemeldeten Mobilendgeräte, die auf ein Mobilfunknetz zugreifen können. Ein Hostserver kann dabei alle Bedürfnisse eines Hosts abdecken. Grössere Unternehmen mit mehreren Standorten oder Verkehrsbetrieben mit Fahrzeugen verwenden vorzugsweise an jedem Standort und in jedem Fahrzeug wenigstens einen Hostserver, der mit einem zentralen Hostserver kommuniziert. Der zentrale Hostserver kann dabei die Koordination der Ausgabe der Voucher steuern, kontrollieren und sichern. Die ausgegebenen Voucher oder entsprechende Rapporte können von den Hostservern direkt oder via den zentralen Hostserver zum Service-Provider übertragen werden. Zu beachten ist, dass den Mobilendgeräten üblicherweise unterschiedliche Service-Provider zugeordnet sind. Der Host wird dabei mit den Serviceprovidern Verträge abschliessen und aufgrund des hohen Verkehrsaufkommens günstige Tarife aushandeln.

Vorzugsweise übermittelt der zentrale Hostserver dem Hostserver und dem Service-Provider oder dem Netzbetreiber in kurzen zeitlichen Intervallen Listen mit Referenznummern, die bei der Vergabe der Voucher diesen individuell zugeordnet werden und die vom Service-Provider oder dem Netzbetreiber bei der Verrechnung der Voucher geprüft werden. Auf diese Weise kann das Kommunikationssystem gesichert werden. Sofern z.B. der Hostserver entwendet wird, werden diesem keine neuen Referenznummern zugestellt und die vergebenen Referenznummern für ungültig erklärt. Voucher mit ungültigen Referenznummern, die bei einem Service-Provider eintreffen, können dabei zur Ermittlung der Personen verwendet werden, die den Hostserver entwendet haben.

Ebenso kann der Hostserver, gegebenenfalls der zentrale Hostserver die Funkbaken überwachen. Sofern eine Funkbake entwendet wird, wird deren Identifikation als ungültig erklärt.

Die Verwertung des Vouchers durch den Service-Provider oder den Netzbetreiber kann mit relativ einfachen Massnahmen durchgeführt werden. Vorausgesetzt ist lediglich, dass der Service-Provider oder der Netzbetreiber den erfindungsgemässen Verfahrensablauf in seine Verfahrensabläufe, insbesondere in den Rechnungsablauf einbindet. Grundsätzlich ist ein Austausch der Rechnungsadresse erforderlich. Ergänzend können Prüfungen durchgeführt und Bestätigungen versandt werden.

Billing und Accounting im GSM Mobilfunknetz sind in [4], Michel Mouly, Marie-Bernadette Pautet, The GSM System for Mobile Communications, Cell & Sys Verlag, 1992, Kapitel 9.1.2, Seiten 572 bis 577 beschrieben. Dort ist beschrieben, dass die internationale Mobilteilnehmeridentität (IMSI) die Grundlage für die korrekte Verrechnung der Kommunikationsdienste bildet.

Charging Informationen werden im Heimnetzwerk des Anwenders in einem Charging Center gesammelt und dem Service-Provider zugestellt, der über ein Billing Center verfügt, welches die Kommunikationskosten an den Subscriber bzw. Anwender weiter verrechnet.

Durch Übermittlung des Vouchers wird der Service-Provider oder der Netzwerkbetreiber vom Host autorisiert, die Rechnungsadresse zu ändern, so dass zumindest in den Rechnungsabläufen die Kennung, z.B. die IMSI des Anwenders durch eine Kennung oder IMSI des Hosts ersetzt wird.

Somit benötigt der Service-Provider oder der Netzwerkbetreiber den Voucher und eine Bestätigung des Hosts, der die Gültigkeit des Vouchers bestätigt. Der Voucher selbst kann eine Bestätigung des Hosts enthalten, sodass dieser den Voucher später nicht zurückweisen kann. Vorzugsweise werden Voucher mit dem privaten Schlüssel (private key) des Hosts signiert bzw. codiert und vom Service-Provider mittels des öffentlichen Schlüssels (public key) decodiert. Durch die Nutzung der Public-Key-Infrastruktur kann der Verfahrensablauf daher in einfacher Weise gesichert werden (siehe [6], EP1263164B1, oder https://de.wikipedia.org/wiki/Public-Key-Infrastruktur).

Der Voucher kann dabei vom Host direkt oder über den begünstigten Anwender bzw. über dessen Mobilendgerät zum Service-Provider oder zum Netzwerkbetreiber übertragen werden. Da eine Bestätigung des Hosts oder ein entsprechend gesicherter Voucher erforderlich ist und die Zeitdauer des kostenlosen Zugriffs auf die Kommunikationsdienste festgelegt ist, wird der Voucher vorzugsweise vom Host direkt an den Service-Provider oder den Netzwerkbetreiber gesandt. Da die Verrechnung der Kommunikationskosten üblicherweise über einen Service-Provider erfolgt, kann die Verarbeitung des Vouchers wiederum am einfachsten direkt beim Service-Provider erfolgen. Dieser Vorgang kann zwischen dem Host und dem Service-Provider nach einem einfachen Protokoll abgewickelt werden, welches Art und Inhalt der Kommunikation zwischen dem Host und dem Service-Provider festlegt und unabhängig von den Protokollen des Netzwerks ist. Es ist auch möglich, dass verschiedene Service-Provider unterschiedliche Protokolle zu diesem Zweck verwenden.

Sollte die Verwertung des Vouchers innerhalb des Mobilfunknetzes erfolgen, so ist ein Eingriff peripher im Charging Center am einfachsten möglich. Wiederum wird die direkte Übergabe des Vouchers durch den Host bevorzugt. Die Übergabe des Vouchers durch den Anwender bzw. das Mobilendgerät kann durch Erweiterungen des Protokolls des Mobilfunknetzes geregelt werden. Z.B. kann die Übergabe oder Prüfung des Vouchers bei der Anmeldung des Mobilendgeräts im Mobilfunknetz erfolgen. In [4], Kapitel 1.3.1.7, Seite 71, Security Functions, ist beschrieben, dass eine Authentisierung des Anwenders erfolgt, um den Zugang von nicht registrierten Dritten zu vermeiden. Im Rahmen einer erweiterten Authentisierung kann der Voucher präsentiert werden, welcher in der Folge geprüft wird. Aus der Sicht des Netzwerkbetreibers kann dies ohne Risiko erfolgen, da er eine Haftung für ungültige Voucher vertraglich ausschliessen kann. Sobald ein Voucher anerkannt wird, kann in den Prozessen des Netzwerks für das Billing und Accounting die Kennung des Hosts anstelle der Kennung des Anwenders verwendet werden.

Nachfolgend wird die Erfindung anhand von Zeichnungen näher erläutert. Dabei zeigt:
- Fig. 1: ein erfindungsgemässes Kommunikationssystem mit einem zellularen Mobilfunknetz PLMN, welches einen geographischen Bereich überdeckt, in dem ein Eisenbahnzug TH mit Fahrgästen verkehrt, die Mobilendgeräte MT verwenden, für die von einem Hostserver HS des Bahnbetreibers je ein Voucher VR bereit gestellt wird, der vom Netzwerkbetreiber oder dem Service-Provider bei der Belastung der Kommunikationskosten berücksichtigt wird;
- Fig. 2a: ein Kommunikationssystem z.B. gemäss Fig. 1, innerhalb dem Voucher VR vom Hostserver HS direkt zum Service-Provider SP, gegebenenfalls zu einem Charging Center CHC des Netzwerkbetreibers, übertragen werden;
- Fig. 2b: den Ablauf des Verfahrens zur Vergabe eines Vouchers VR und zur Verrechnung der Kommunikationskosten für Kommunikationsdienste, die von einem Mobilendgerät MT im Kommunikationssystem von Fig. 2a in Anspruch genommen wurden;
- Fig. 3a: ein in einem Gebäude HH angeordnetes erfindungsgemässes Kommunikationssystem, innerhalb dem Voucher VR vom Hostserver HS zu den Mobilendgeräten MT und von diesen weiter zum Service-Provider SP oder zum Charging Center CHC des Netzwerkbetreibers, übertragen werden; und
- Fig. 3b: den Ablauf des Verfahrens zur Vergabe eines Vouchers VR und zur Verrechnung der Kommunikationskosten für Kommunikationsdienste, die von einem Mobilendgerät MT im Kommunikationssystem von Fig. 3a in Anspruch genommen wurden.
- Fig. 4a: ein Kommunikationssystem z.B. gemäss Fig., in dem Funkbaken HB vorgesehen sind, mittels denen der Standort der Mobilendgeräte MT, die sich beim Hostserver HS anmelden, feststellbar ist; und
- Fig. 4b: den Ablauf des Verfahrens zur Vergabe eines Vouchers VR und zur Verrechnung der Kommunikationskosten für Kommunikationsdienste, die von einem Mobilendgerät MT im Kommunikationssystem von Fig. 4a in Anspruch genommen wurden.

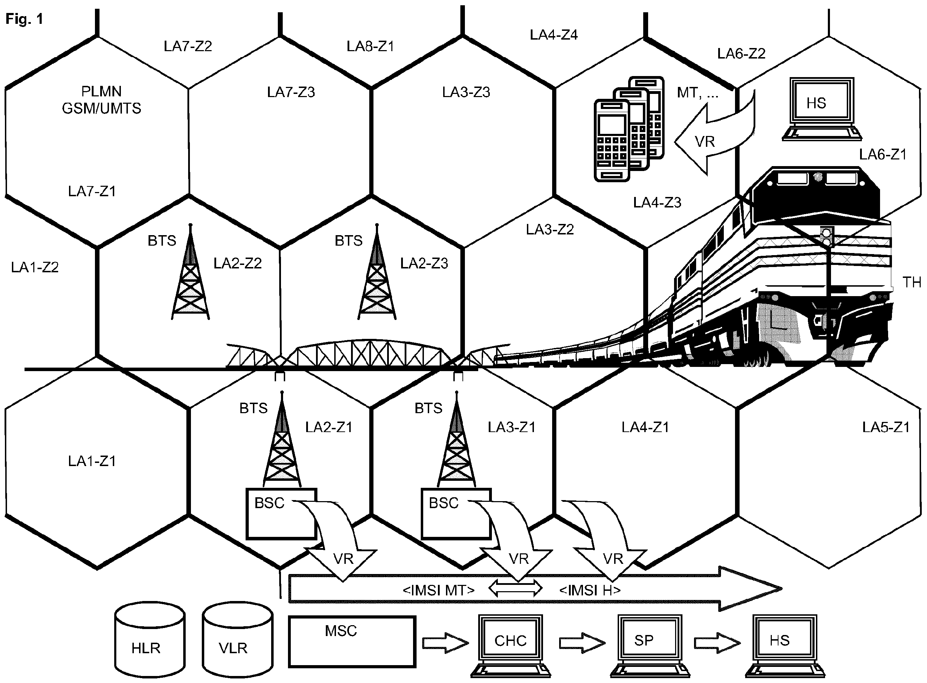

Fig. 1 zeigt einen Abschnitt eines erfindungsgemässen zellularen Mobilfunknetzes PLMN mit mehreren Aufenthaltsbereichen LA1, ..., LA8, ..., welche je wenigstens eine Zelle LA_{X}-Z_{Y} aufweisen. Innerhalb des gezeigten Abschnitts verlaufen mehrere Verkehrswege, insbesondere eine Eisenbahnlinie, auf der ein Eisenbahnzug TH mit zahlreichen Fahrgästen verkehrt. Fig. 1 zeigt ferner einzelne Einheiten des Mobilfunknetzes PLMN, nämlich eine mobile Vermittlungszentrale MSC, eine Heimdatei HLR, eine Besucherdatei VLR, Sende- und Empfangsstationen BTS und zugehörige Steuereinheiten BSC, sowie ein Charging Center CHC.

Charging Informationen bzw. sogenannte Toll Tickets für gelieferte Kommunikationsdienste werden im Charging Center CHC gesammelt und dem betreffenden Service-Provider SP belastet, der über ein Billing Center verfügt, welches die Kommunikationskosten normalerweise an den Subscriber bzw. Anwender weiter verrechnet (siehe [4], Seite 575).

Fig. 1 zeigt weiter, dass der Bahnbetreiber innerhalb des Eisenbahnzuges TH wenigstens einen Hostserver HS verwendet, der drahtlos mit den Mobilendgeräten MT der Passagiere kommuniziert und für diese nach Feststellung der Identität und gegebenenfalls weitere Informationen Voucher VR bereitgestellt, welche es den Mobilendgeräten MT erlauben, Kommunikationsdienste kostenlos in Anspruch zu nehmen. Diese Voucher VR werden direkt vom Hostserver HS oder indirekt über die Mobilendgeräte MT an eine Instanz des Mobilnetzwerks PLMN, vorzugsweise das Charging Center CHC, oder zum Service-Provider SP übertragen. Die für den Fahrgast bzw. Anwender registrierten und z.B. seiner internationalen Mobilteilnehmeridentität (IMSI) zugeordneten Kosten werden in der Folge dem Bahnbetreiber bzw. Host belastet und vorzugsweise in einem zentralen Host Server HSC erfasst.

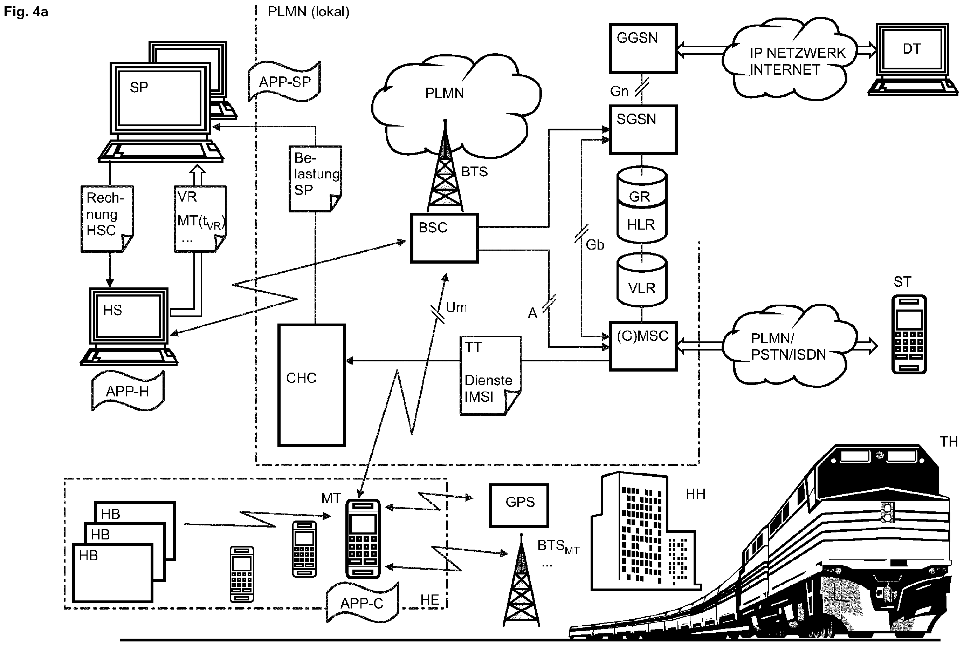

Für den Hostserver HS ist die Lokalisierung der Mobilendgeräte MS von besonderer Bedeutung. Diese Lokalisierung kann sich aus der Konfiguration des Kommunikationssystems automatisch ergeben. Falls der Hostserver in ein lokales Netzwerk eingebunden und mit einem Mobilendgerät MT Daten austauscht, befindet sich das Mobilendgerät zwangsläufig im Bereich des lokalen Netzwerks. Sofern der Hostserver HS hingegen über das Mobilfunknetz mit dem Mobilendgerät MT Daten austauscht, werden vorzugsweise Massnahmen vorgesehen, die es erlauben den Standort des Mobilendgerät MT zu ermitteln. Zu diesem Zweck werden im Kommunikationssystem von Fig. 4a sogenannte Funkbaken verwendet, die periodisch eine Kennung aussenden, die von den Mobilendgeräten MT empfangen wird und die es dem Hostserver HS erlaubt, den Standort des Mobilendgeräts MT der betreffenden Funkbake zuzuordnen. Der Hostserver HS und die Mobilendgeräte MT können daher an unterschiedlichen Standorten angeordnet sein.

In Fig. 1 ist illustriert, dass die Verwertung des Vouchers VR an verschiedenen Orten innerhalb der gesamten Prozesskette erfolgen kann, indem die IMSI des Anwenders, welche üblicherweise für Verrechnungszwecke berücksichtigt wird, durch eine Kennung des Bahnbetreibers ersetzt wird. In der Folge werden die aufgelaufenen Kommunikationskosten unter Verwendung dieser Kennung dem Bahnbetreiber belastet. Die Kennung des Bahnbetreibers kann ebenfalls eine internationale Mobilteilnehmeridentität IMSI (IMSI-H) sein, die innerhalb der Prozesskette gleich behandelt wird, wie jede andere IMSI. Die Änderung kann daher mit minimalem Aufwand im Kommunikationssystem implementiert werden. Die Übertragung des Vouchers kam auf unterschiedlichen Wegen und über unterschiedliche Medien erfolgen.

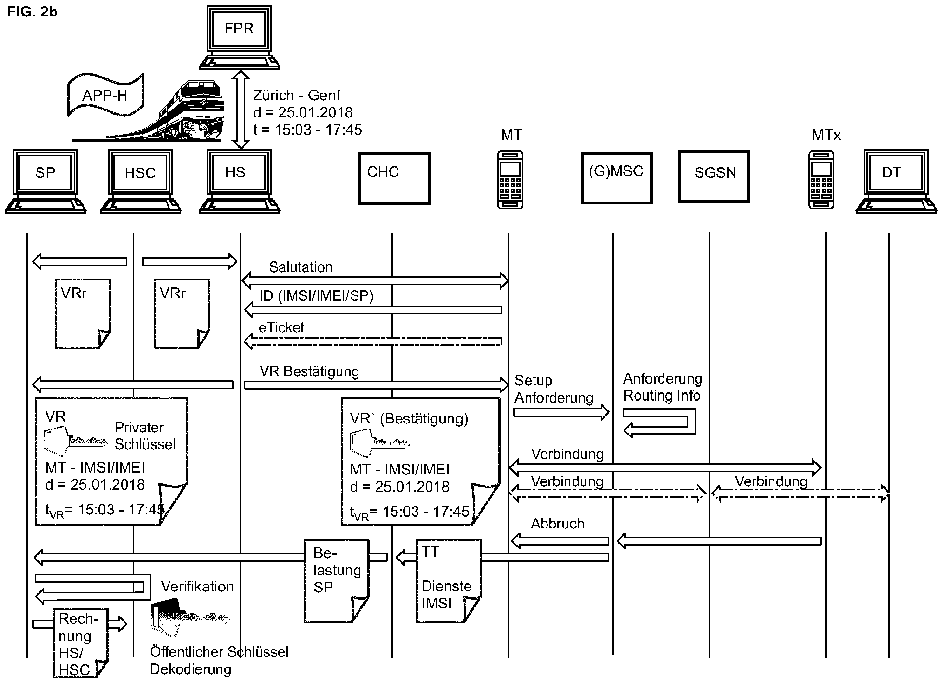

Der Ablauf des Verfahrens zur Ausgabe und Verwertung eines Vouchers erfolgt in vier prinzipiellen Schritten (siehe auch Fig. 2b, Fig. 3b oder Fig. 4b):
a) Zwischen dem Hostserver HS und einem Mobilendgerät MT wird eine drahtlose Kommunikationsverbindung erstellt, über die Identifikationsdaten ID vom Mobilendgerät MT zum Hostserver HS übertragen werden.
b) Nach Auswertung und/oder Überprüfung der Identifikationsdaten ID erstellt der Hostserver HS einen Voucher VR, in dem wenigstens die Identifikationsdaten ID des Mobilendgeräts MT und eine Zeitdauer t_{VR}, welche die Gültigkeit des Vouchers VR bestimmt, registriert sind. Vorzugsweise wird auch die Kennung des Hostservers HS notiert.
c) Der erstellte Voucher VR wird direkt oder indirekt an den Betreiber des mobilen Kommunikationsnetzes PLMN oder an den Service-Provider SP übertragen, der für das Mobilendgerät MT die Gebührenabrechnung erstellt.
d) Abschliessend belastet der Betreiber des mobilen Kommunikationsnetzes PLMN oder der Service-Provider SP anhand des Vouchers VR Kommunikationskosten für Datenverbindungen oder Gesprächsverbindungen des Mobilendgeräts MT, die während der im Voucher VR angegebenen Zeitdauer t_{VR} registriert wurden, zumindest teilweise einem der Kennung des Hostservers HS zugeordneten Konto.

Dieser Vorgang wird nachstehend anhand von Ausführungsbeispielen detailliert erläutert.

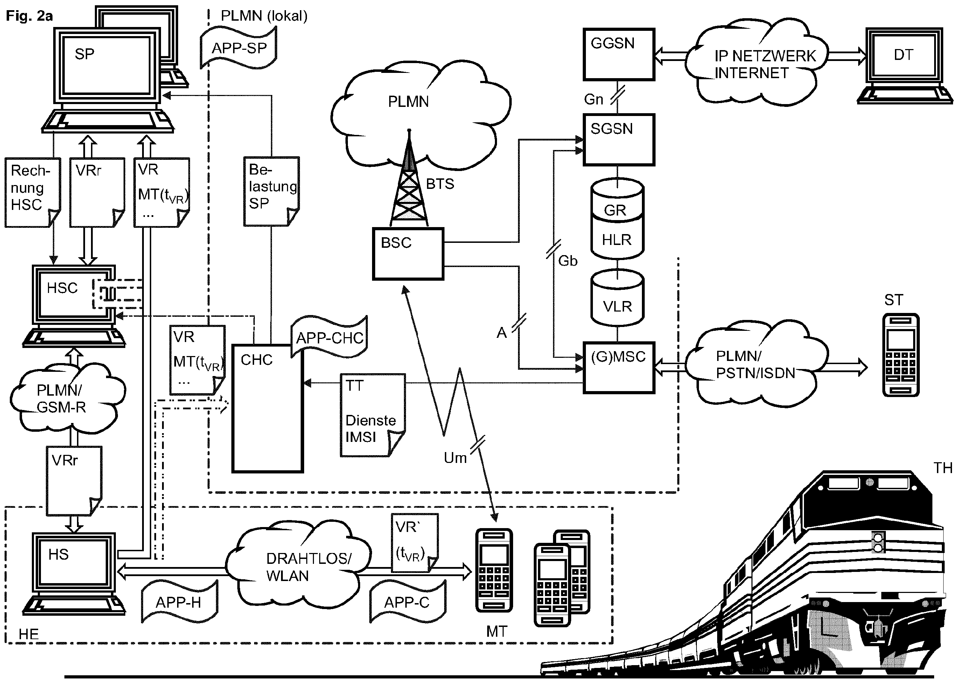

Fig. 2a zeigt in einer ersten bevorzugten Ausgestaltung das Kommunikationssystem von Fig. 1, innerhalb dem Voucher VR vom Hostserver HS direkt zum Service-Provider SP, gegebenenfalls zu einem Charging Center CHC des Netzwerkbetreibers, übertragen werden.

Fig. 2a zeigt das Mobilfunknetz PLM mit einer EDGE-Architektur, die in [5], Bernhard Walke, Mobilfunknetze und ihre Protokolle, Band 1, B.G. Teubner Verlag, Stuttgart 2000, Kapitel 3.17, Seiten 339 bis 341 beschrieben ist. Die EDGE (Enhanced Data Rates for GSM Evolution)-Architektur entspricht weitgehend der GPRS-Architektur, verwendet aber ein anderes Modulationsverfahren, um höhere Datenübertragungsraten zu erreichen. Der GSM-Paketdatendienst GPRS (General Packet Radio Service) ist in [5], Seiten 294 bis 321 beschrieben. Netzübergangsfunktionen sind in den folgenden Seiten 322 bis 325 beschrieben. Schnittstellen und Referenzpunkte im GPRS sind in [5], Seite 304, beschrieben. Die bekannte GSM-Netzarchitektur (siehe oben) wird für den Paketdatendienst um drei Netzelemente erweitert. Der Gateway GPRS Support Node (GGSN) dient als Schnittstelle zu externen Netzen (IP-Network / Internet). Der Serving GPRS Support Node (SGSN) dient zur funktionalen Unterstützung der Mobilendgeräte MT. Alle GPRS-bezogenen Daten werden im GPRS-Register GR gespeichert, das einen Teilbereich des GSM-HLR bildet. Über die Funkschnittstelle Um haben die Mobilendgeräte MT Zugang zum Mobilfunknetz. Der eigentliche Datenverkehr wird im GPRS über den SGSN abgewickelt, die MSC dient nur der Signalisierung.

Das erfindungsgemässe Kommunikationssystem umfasst zusätzlich den Hostserver HS sowie Software-Anwendungen, eine im Hostserver HS implementierte Applikation oder Anwendung APP-H und eine in den Mobilendgeräten MT installierte Anwendung APP-C. Zum Empfang und der Verwertung der Voucher VR ist beim Service-Provider SP vorzugsweise im Billing Center eine Anwendung APP-SP implementiert. Sofern der Voucher VR durch den Netzbetreiber empfangen und z.B. im Charging Center CHC verwertet wird, ist dort eine Anwendung APP-CHC vorgesehen.

Die Mobilendgeräte MT können z.B. von Fahrgästen innerhalb des Eisenbahnzuges TH mitgeführt oder auch in einem Restaurant eines Bahnhofs verwendet werden. Der Aufenthaltsraum der Anwender kann daher mobil oder stationär sein. Der (stationäre oder mobile) Hostserver HS ist daher in einer räumlichen Einheit HE des Hosts bzw. Bahnbetreibers angeordnet. Mobilendgeräte MT die sich innerhalb der räumlichen Einheit HE befinden können über die Anwendungen APP-C und APP-H drahtlos, z.B. über ein WLAN, gegebenenfalls Bluetooth, mit dem Hostserver HS Kontakt aufnehmen und kommunizieren.

Eingangs wurde erwähnt, dass aus der EP2631152A1 Verfahren zur Ortung eines Mobilendgeräts in einem Mobilfunknetz bekannt sind.

Bekanntlich werden von Bahnbetreibern bereits Anwendungen oder Applikationen für Mobilendgeräte MT zur Verfügung gestellt, mittels denen Fahrpläne abgerufen und Fahrscheine bzw. Tickets gekauft werden können. Die erfindungsgemässe Anwendung APP-C ist daher vorzugsweise ein zusätzliches Modul einer solchen bekannten Anwendung. Für den Kauf eines Fahrscheins ist der Anwender bereits beim Bahnbetreiber registriert. Identifikationsdaten des Anwenders sind daher in der Heimdatei HLR des Mobilfunknetzes PLMN und in der Datenbank des Bahnbetreibers registriert. Für die nachstehenden Beispiele wird vorzugsweise die in der Heimdatei HLR registrierte Identität, nämlich die IMSI verwendet. Alternativ könnte die beim Bahnbetreiber registrierte Identität verwendet werden.

Der Hostserver HS kann mobil oder stationär sowie zentral oder dezentral angeordnet sein. Zudem können z.B. in einem Gebäude oder einer Eisenbahnzug mehrere Hostserver vorgesehen sein, die individuell gemäss dem erfindungsgemässen Verfahren arbeiten.

Der Hostserver kann z.B. in Kontrollgeräte integriert sein, mittels denen das Zugpersonal die Fahrscheine prüft. Bei der Prüfung der Fahrscheine können die Identifikationsdaten von den Mobilendgeräten ausgelesen und die Voucher erstellt werden. Mit der Kontrolle der Fahrscheine erfolgt daher gleichzeitig die Vergabe zur kostenlosen Nutzung von Kommunikationsdiensten. Somit ergeben sich für den Bahnbetreiber und die Fahrgäste ohne zu zusätzlichen Aufwand besondere Vorteile.

Bei der Kommunikation zwischen dem Hostserver HS und dem Mobilendgerät MT wird somit eine verwertbare Identität abgerufen und in einen Voucher VR aufgenommen. Zusätzlich wird eine Zeitdauer t_{VR} bestimmt, während der der Voucher VR gültig ist. Verfahren zur Bestimmung dieser Zeitdauer t_{VR} wurden oben beschrieben.

In der beschriebenen Ausgestaltung ist dem Hostserver HS bekannt, dass die Mobilendgeräte MT sich innerhalb eines Eisenbahnwagens befinden und deshalb zum Bezug der kostenlosen Kommunikationsdienste berechtigt sind. Sofern dem gegebenenfalls dezentral angeordneten Hostserver der Aufenthaltsort der Mobilendgeräte MT nicht bekannt ist, wird dieser z.B. nach einem nachstehend beschriebenen Verfahren ermittelt. Möglich ist auch die Ortung innerhalb des Mobilfunknetzes, falls diese genügend genau ist.

Der erstellte Voucher VR oder eine Liste mit erstellten Vouchern VR wird vorzugsweise mittels des privaten Schlüssels der Public Key Infrastruktur vom Bahnbetreiber signiert (siehe Fig. 2b) . Durch Dekodierung der Voucher VR mittels des öffentlichen Schlüssels kann der Service-Provider SP oder das Charging Center CHC in der Folge feststellen, ob die Voucher VR tatsächlich gültig sind.

Der Voucher VR wird in diesem Ausführungsbeispiel entweder zum Charging Center CHC des Mobilfunknetzes PLMN oder bevorzugt zum Billing Center des Service-Providers SP übertragen. Eine Bestätigungskopie des Vouchers VR' wird zum Mobilendgerät MT übertragen und dort gespeichert. Der Anwender kann daher später kontrollieren, ob tatsächlich keine Belastungen für die Zeitdauer t_{VR} erfolgt sind. Innerhalb des Charging Centers CHC oder Billing Center des Service-Providers SP wird die Rechnungsadresse für registrierte Kommunikationskosten, die innerhalb der Zeitdauer t_{VR} für das Mobilendgerät MT registriert wurden, auf das Konto des Hosts bzw. Bahnbetreibers geändert.

Fig. 2a zeigt, dass eine entsprechende Rechnung <billHSC> an einen zentralen Hostserver HSC übertragen wird. Der optional vorgesehene zentrale Hostserver HSC verwaltet vorzugsweise, die Vergabe, den Transfer und die Verrechnung der Voucher VR. Der vom Hostserver HS ausgestellte Voucher VR kann zum zentralen Hostserver HSC übermittelt werden. Der zentrale Hostserver HSC sammelt in der Folge alle Voucher VR und übermittelt diese geordnet, gegebenenfalls mit dem privaten Schlüssel signiert, an den oder die Service-Provider SP, gegebenenfalls an das Charging Center CHC des Mobilfunknetzes PLMN.

Zur Kontrolle der Abgabe der Voucher VR gibt der zentrale Hostserver HSC vorzugsweise Laufnummern VRr aus, die der Hostserver HS individuell in die Voucher VR einträgt. Der zentrale Hostserver HSC oder der Service-Provider SP, dem diese Laufnummern VRr ebenfalls übertragen werden, können daher kontrollieren ob die Voucher VR gültig sind. Die Kommunikation zwischen dem zentralen Hostserver HSC und dem Hostserver HS sowie den Service-Provider SP kann über beliebige Kommunikationsnetze, über Mobilfunknetze GSM / GSM-R oder über das Internet erfolgen.

Nach Erhalt des Vouchers VR bzw. der entsprechenden Bestätigung VR' kann der Anwender des Mobilendgerät MT die Kommunikationsdienste des Kommunikationsnetzwerks PLMN in Anspruch nehmen und Datenverbindungen oder Sprachverbindungen zu Dritten DT, ST aufbauen.

Die entsprechenden Belastungen TT werden von der Vermittlungszentrale (G)MSC zum Charging Center CHC übertragen und von diesem mit einer Rechnung <charge SP> an den Service-Provider SP oder direkt an den zentralen Hostserver HSC übermittelt. Im Charging Center CHC oder im Service-Provider SP wird die Rechnungsadresse geändert, wie dies oben beschrieben wurde. Der Service-Provider SP sendet in der Folge eine Rechnung <bill HSC> an den zentralen Hostserver HSC.

Fig. 2b zeigt den Ablauf des Verfahrens zur Vergabe eines Vouchers VR und zur Verrechnung der Kommunikationskosten für Kommunikationsdienste, die von einem Mobilendgerät MT im Kommunikationssystem von Fig. 2a in Anspruch genommen wurden.

Optional werden vom zentralen Hostserver HSC zuerst, sofern vorgesehen, die Laufnummern VRr für die Voucher VR zum Hostserver HS und zur Kontrolle zum Service-Provider SP übertragen.

Anschliessend erfolgt die Anmeldung des Mobilendgeräts MT beim Hostserver HS z.B. nach dem Bluetooth Protokoll oder über das Mobilfunknetz. In der Folge werden Daten vom Mobilendgerät MT zum Hostserver HS übertragen, die Identifikationsdaten ID, die vorzugsweise die IMSI, gegebenenfalls die IMEI und die Identifikation des in Anspruch genommenen Serviceproviders umfassen. Ferner können Berechtigungen, wie das Vorliegen eines elektronischen Tickets <eTicket> abgefragt werden. Weiterhin können Ortsdaten übertragen oder ermittelt werden.

Nach Prüfung der Daten und Berechtigungen wird für eine Zeitdauer t_{VR} ein Voucher VR ausgestellt, vorzugsweise mittels des privaten PKI Schlüssels signiert, und zum Service-Provider SP übertragen. Die Zeitdauer t_{VR} wird anhand des elektronischen Tickets <eTicket> bestimmt, welches ausweist, dass der Fahrgast von Zürich nach Genf reist. Von einem Fahrplan oder Fahrplanrechner FPR wird ermittelt, dass die Fahrzeit nachmittags von 15:03 bis 17:45 dauert. Der Fahrgast kann daher während der Reisezeit kostenlos auf Kommunikationsdienste zugreifen. Die Fahrzeiten können z.B. vom Hostserver HS oder vom zentralen Hostserver HSC überprüft werden, um im Fall einer Verspätung den Voucher VR entsprechend anzupassen.

Die Kommunikationskosten werden in der Folge mittels Toll Tickets <TT> dem Charging Center gemeldet, welches die Kommunikationskosten mittels Rechnung <charge SP> an den Service-Provider SP weiter verrechnet, der in der Folge die Belastungen und die Voucher VR, die vorzugsweise mittels eines öffentlichen PKI-Schlüssels decodiert werden, prüft und eine Rechnung <bill HSC> an den Hostserver HS, gegebenenfalls den zentralen Hostserver HSC sendet.

Die Anmeldung der Mobilendgeräte MT im Mobilfunknetz PLMN und der Aufbau und Abbau der Verbindungen erfolgen gemäss den Protokollen des Mobilfunknetzes.

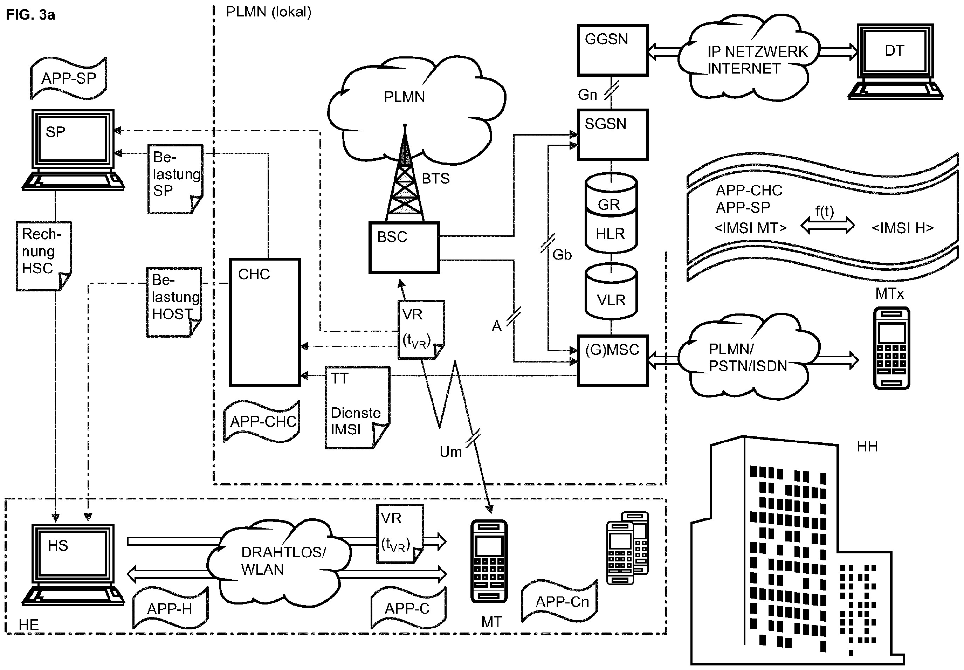

Fig. 3a zeigt das in einem Gebäude HH installierte erfindungsgemässe Kommunikationssystem von Fig. 1, innerhalb dem Voucher VR vom Hostserver HS zu den Mobilendgeräten MT und von diesen weiter zum Service-Provider SP oder zum Charging Center CHC des Netzwerkbetreibers, übertragen werden. Diese Übertragung erfolgt wiederum nach festgelegten Protokollen. Vorzugsweise wird der Voucher VR in die Meldungen eingebaut, die bei der Anmeldung des Mobilendgeräts MT beim Mobilfunknetz PLMN oder beim Aufbau von Verbindungen ausgetauscht werden. In diesem Fall werden die Voucher VR netzseitig aus den Meldungen des Mobilendgeräts MT extrahiert und verwertet. Dazu weist die Architektur des Mobilfunknetzes PLMN vorzugsweise eine Anwendung APP-CHC auf, die im Charging Center CHC die Änderung der Rechnungsadresse zur Folge hat. Alternativ wird der Voucher vom Mobilendgerät MT zum Service-Provider SP übertragen, in dem eine Anwendung APP-SP implementiert ist. Im Mobilendgerät MT ist für jeden Protokoll-Stack, den Protokoll-Stack des WLAN und den GSM-Protokoll-Stack eine Anwendung APP-C bzw. APP-Cn vorgesehen, welche die Kommunikation über das entsprechende Kommunikationsnetz WLAN, PLMN erlaubt.

Der GPRS-Protokollstapel ist in [5], Seite 308, gezeigt. Die Anwendung APP-Cn würde somit in der Anwendungsschicht des Mobilendgeräts und die Anwendung APP-C in einer zusätzlichen Anwendungsschicht des SGSN implementiert.

Die Voucher VR können vom Mobilendgerät MT auch auf andere Weise an den Service-Provider SP oder das Charging Center CHC übertragen werden. Beispielsweise werden diese per E-Mail oder mittels Kurzmeldungen übertragen.

Fig. 3a zeigt ferner, dass die Hosteinheit HE in einem Gebäude HH, z.B. einem Bürogebäude, einem öffentlichen Gebäude oder einem amtlichen Gebäude vorgesehen ist. Die Erfindung ist daher universell für beliebige mobile oder stationäre Hosteinheiten HE anwendbar. D. h., die in Fig. 2a, Fig. 3a und Fig. 4a gezeigten Ausgestaltungen des Kommunikationssystems können wahlweise in Gebäuden, Verkehrsmitteln oder öffentlichen Plätzen eingesetzt werden. Besonders vorteilhaft ist die Erfindung in mobilen Hosteinheiten HE einsetzbar, in denen ein kostenloser WLAN-Zugriff oft ungenügende Qualität bietet oder aufwändige Installationen erfordert.

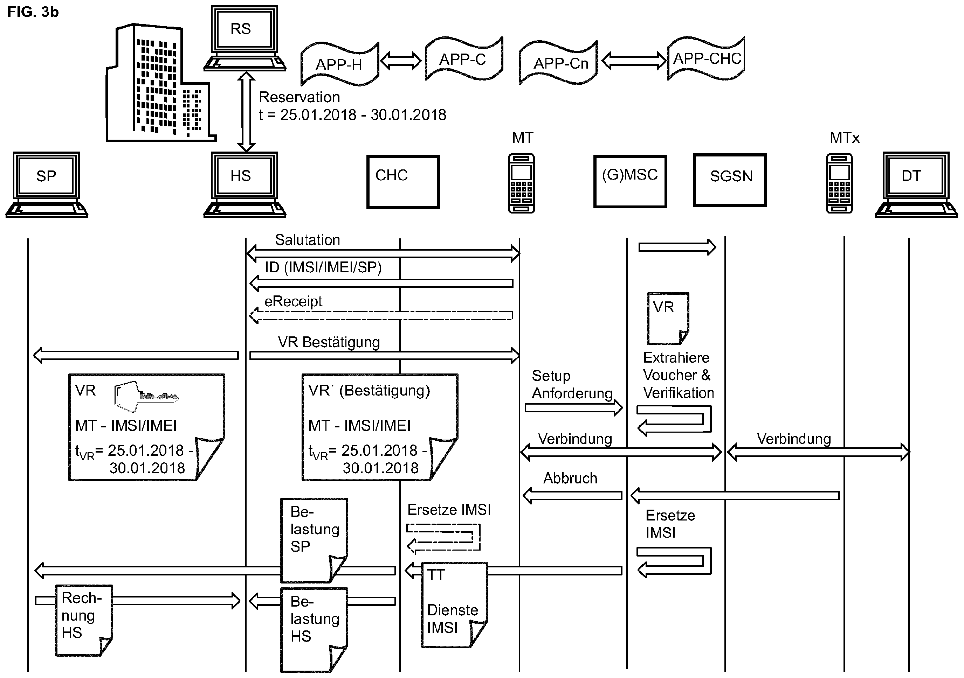

Fig. 3b zeigt den Ablauf des Verfahrens zur Vergabe eines Vouchers VR und zur Verrechnung der Kommunikationskosten für Kommunikationsdienste, die von einem Mobilendgerät MT im Kommunikationssystem von Fig. 3a in Anspruch genommen werden.

Über ein WLAN oder das Mobilfunknetz erfolgt wiederum der Datenaustausch zwischen den Mobilendgeräten MT und dem Hostserver HS. Die Laufzeit t_{VR} für den Voucher VR wird z.B. entsprechend der Dauer der Reservation eines Hotelzimmers gewählt, die aus einem Rechner RS z.B. an der Rezeption des Hotels ausgelesen werden kann. Nach Überprüfung der Identifikationsdaten und Berechtigungen, z.B. einer Hotel Reservation <eReceipt>, wird der Voucher VR erstellt und an das Mobilendgerät MT übermittelt und von diesem weiter an das Mobilfunknetz PLMN übertragen. Die Zeitdauer t_{VR} ist entsprechend der Reservation vom 25.01.2018 bis zum 30.01.2018 gewählt. Der Anwender kann daher im Zeitraum seiner Reservation Kommunikationsdienste seines Service-Providers SP kostenlos nutzen. Die entsprechenden Kosten werden dem Hotelbetreiber belastet.

Der Voucher wir vorzugsweise mit dem privaten PKI-Schlüssel des Hotels signiert. Sofern die Anwender hingegen nur kurzzeitig Gäste im Hotel sind, kann der Standort der Mobilendgeräte MT anhand von Massnahmen bestimmt werden, die nachstehend mit Bezug auf Fig. 4a beschrieben werden. Das Beispiel von Fig. 3a zeigt, dass Ortsdaten nicht in jedem Fall ermittelt werden müssen, so z.B., falls der Hostserver HS eine Berechtigung anderweitig, z.B. anhand der Reservation im Hotel ermitteln kann. In diesem Fall ist hingegen die Registrierung des Mobilendgeräts MT vorteilhaft, sodass unter Berücksichtigung der Reservation und der Registrierung des Mobilendgerät MT der Voucher VR erstellt werden kann.

Der Voucher VR wird bei der Ausgestaltung des Kommunikationssystems von Fig. 3a an den Netzwerkbetreiber, gegebenenfalls das Charging Center CHC, gesandt werden. Von der zuständigen Instanz (G)MSC oder SGSN, in der die Anwendung APP-CHC implementiert ist, wird der Voucher VR extrahiert. In der Folge wird die Rechnungsadresse bereits bei der Erstellung des Toll Tickets <TT> oder später im Charging Center CHC geändert. Vorzugsweise wird die IMSI-MT des Anwenders durch die IMSI-H des Hosts ersetzt. Die Rechnung <charge SP> mit der geänderten Rechnungsadresse wird in der Folge an das Servicecenter SP oder direkt zum Hostserver HS gesandt. Wie erwähnt, kann die Verwertung des Vouchers VR auch vom Service-Provider SP vollzogen werden.

Der Voucher VR kann, wie in Fig. 2a und Fig. 4a gezeigt, vom Hostserver HS des Hotels auch direkt zum Service-Provider SP übertragen werden. Die Zeitdauer t_{VR} kann anhand der Reservation oder anhand der Präsenzzeit des Anwenders im Hotel anhand von Funkbaken bestimmt werden, wie dies mit Bezug zu Fig. 4a beschrieben ist.

Fig. 4a zeigt eine besonders vorteilhafte Ausgestaltung des erfindungsgemässen Kommunikationssystems, welches mit besonders geringem Aufwand z.B. in einem Gebäude HH, einem Eisenbahnzug TH oder auch auf öffentlichem Areal realisiert werden kann. In diesem Falle kommuniziert der Hostserver HS mit den Mobilendgeräten MT auf der Anwendungsebene der installierten Anwendungen APP-C und APP-H über das Mobilfunknetz PLMN.

Der Hostserver HS kann daher an einem beliebigen Standort, z.B. am Hauptsitz des Bahnbetreibers installiert werden. Weiter ist illustriert, dass die Anwender Besucher eines Gebäudes HH oder Reisende in einem Eisenbahnzug TH sein können. Nachstehend ist beschrieben, dass die Anwender nach Installation der Anwendungen APP-C vorzugsweise beim Hostserver HS registriert werden. Anschliessend werden über die Anwendungen APP-C Anträge zur kostenlosen Nutzung von Kommunikationsdiensten zum Hostserver HS gesandt. Wiederum prüft der Hostserver, ob die Anwender zum Bezug von kostenlosen Kommunikationsdiensten berechtigt sind. Dies kann durch Nachweis einer Berechtigung, z.B. eines elektronischen Tickets oder durch Nachweis des Standorts des Mobilendgeräts MT im Servicebereich des Hosts, d. h. im Gebäudes HH oder im Eisenbahnzug TH

Sofern die Mobilendgeräte MT über ein elektronisches Ticket oder eine anderweitige Berechtigung verfügen, kann auf die Feststellung des Standorts verzichtet werden. Sofern keine anderweitige Berechtigung vorliegt, wird der Standort der Mobilendgeräte MT im Gebäude HH oder im Eisenbahnzug TH bestimmt. Dies kann durch Ermittlung und Übertragung von GPS Daten oder durch Prüfung der Sende- und Empfangsstation BTS_{MT} erfolgen, an der die Mobilendgeräte MT angemeldet sind. Besonders vorteilhaft, d. h. einfach und präzise kann der Standort der Mobilendgeräte MT mittels Funkbaken HB bestimmt werden, die vom Host, in dessen Dienstbereich oder Servicebereich, z.B. im Gebäude HH oder im Eisenbahnzug TH installiert wurden. Die Funkbaken, z.B. Bluetooth- oder WLAN-Funkbaken, senden kontinuierlich oder periodisch eine Identität oder Kennung BID aus, die von den Mobilendgeräten MT erfasst und zum Hostserver HS übermittelt werden. Die Funkbaken HB werden z.B. von einer Batterie gespeist und können ihren Dienst über eine lange Zeit ohne Wartungsaufwand autonom erfüllen. Die Funkbaken HB können an der Decke oder an einer Wand montiert werden und treten räumlich und optisch kaum in Erscheinung. Die Nachrüstung eines Gebäudes oder eines Eisenbahnzuges kann somit mit minimalem Aufwand und geringen Kosten erfolgen.

Der Hostserver HS hat Zugang zu einem Register, in dem die Identität BID der Funkbaken HB aufgezeichnet ist. Die Identität BID der Funkbaken ist vorzugsweise entsprechend der Fahrzeugnummer des Fahrzeugs gewählt werden, in dem die Funkbaken HB installiert sind. Von den Mobilendgeräten MT wird daher mit der Funkbaken-Identität BID eine Fahrzeugkennung übertragen, die dem Hostserver bereits bekannt ist, oder die er anhand einer Inventarliste des Rollmaterials des Bahnbetreibers ermitteln kann. Der Hostserver kontaktiert z.B. regelmässig einen Server des Eisenbahnnetzes, welcher das Rollmaterial des Eisenbahnnetzes verwaltet, und prüft anhand der gemeldeten Identität BID der Funkbake die Existenz und vorzugsweise den Standort des entsprechenden Eisenbahnwagens.

Besonders vorteilhaft kann die Ortung auch mittels GPS-Daten erfolgen. Aus der EP1862593A2 sind Verfahren und Vorrichtungen bekannt, die es erlauben, die Position eines Eisenbahnwagens auf 1m genau zu bestimmen. Die in einem Eisenbahnnetz befahrenen Routen können daher online präzise bestimmt und/oder in einer Datenbank abgelegt und wieder abgerufen werden. Die von Mobilendgeräten übermittelten GPS-Daten können daher mit aktuell aufgenommenen oder registrierten GPS-Daten der Fahrrouten des Eisenbahnnetzes korreliert werden, um festzustellen, ob sich die Mobilendgeräte MT entlang einer solchen Route verschieben oder verschoben haben. Anhand aktueller Fahrdaten oder Fahrplänen kann zusätzlich die Übereinstimmung der Verschiebung der Mobilendgeräte MT und des Eisenbahnzuges HT geprüft werden. Auf diese Weise lässt sich mit minimalem Verfahrensaufwand und ohne Hardwareaufwand mit Sicherheit bestimmen, ob der Anwender die Dienste des Hosts nutzt und für die kostenlose Nutzung der Kommunikationsdienste berechtigt ist. Erfindungsgemäss ist daher vorgesehen, dass Mobilendgeräte MT einmal oder vorzugsweise mehrmals Satellitendaten bzw. GPS Daten zum Hostserver HS übertragen und dass der Hostserver HS diese GPS Daten der Mobilendgeräte MT
a) mit aktuell ermittelten Ortsdaten des Eisenbahnzuges, und/oder
b) mit registrierten Ortsdaten des Eisenbahnnetzes

vergleicht, um festzustellen, ob die Anwender der Mobilendgeräte MT sich in einem Eisenbahnzug HT befinden, der sich entlang einer Route des Eisenbahnnetzes belegt.

Z.B., festgestellt werden, ob sich Mobilendgeräte MT praktisch Ortsbereich und mit einem nahezu konstanten Offset mit einem Eisenbahnzug HT verschieben, der aktuell das Eisenbahnnetz befährt.

Noch einfacher ist die Zuordnung zu einer aktuell befahrenen Fahrtroute möglich, falls der Anwender die Destination seiner Reise auf seiner Applikation APP-C eingibt und dem Hostserver HS mitteilt. Der Ausgangsort kann in der Folge anhand von GPS Daten ermittelt werden. Start und Ziel der Reise sowie die aktuelle Zeit sind dem Hostserver HS somit bekannt. Auf diese Weise kann verifiziert werden, dass der Anwender nicht nur die entsprechende Strecke befährt, sondern dass er dabei auch die Dienste des Hosts und nicht eines Konkurrenten nutzt. Sofern zwei Bahnbetreiber X, Y beispielsweise den Transport von A nach B zu unterschiedlichen Zeitpunkten anbieten, kann einerseits die Reise von A nach B und anhand der zeitlichen Daten der Fahrt und entsprechenden Fahrplandaten auch der Dienstleister X oder Y bestimmt werden. Nach dem erfindungsgemässen Verfahren können somit das von den Anwendern genutzte Verkehrsmittel bzw. die Reiseroute und/oder der Dienstleister bestimmt werden. Die Anwendung APP-C der Mobilendgeräte MT, die nach der Anmeldung vorzugsweise im Hintergrund weiterläuft, kann GPS-Daten nach einem vorgesehenen Schema oder nach Aufforderung des Hostservers HS übertragen, sodass die Ermittlung genügender GPS Daten gewährleistet ist. Sofern der Aufenthaltsort der Mobilendgeräte über eine bestimmte Zeitdauer stationär in Dienstbereich eines Dienstleisters ist, kann dies anhand von GPS Daten wiederum präzise bestimmt werden. Die kostenlose Nutzung von Kommunikationsdiensten kann daher Mobilendgeräten MT gewährt werden, für die anhand der GPS Daten der entsprechende mobile oder stationäre Standort und somit die entsprechende Berechtigung verifiziert wurde.

Durch Nutzung der GPS Daten kann auf die Verwendung von Funkbaken verzichtet werden

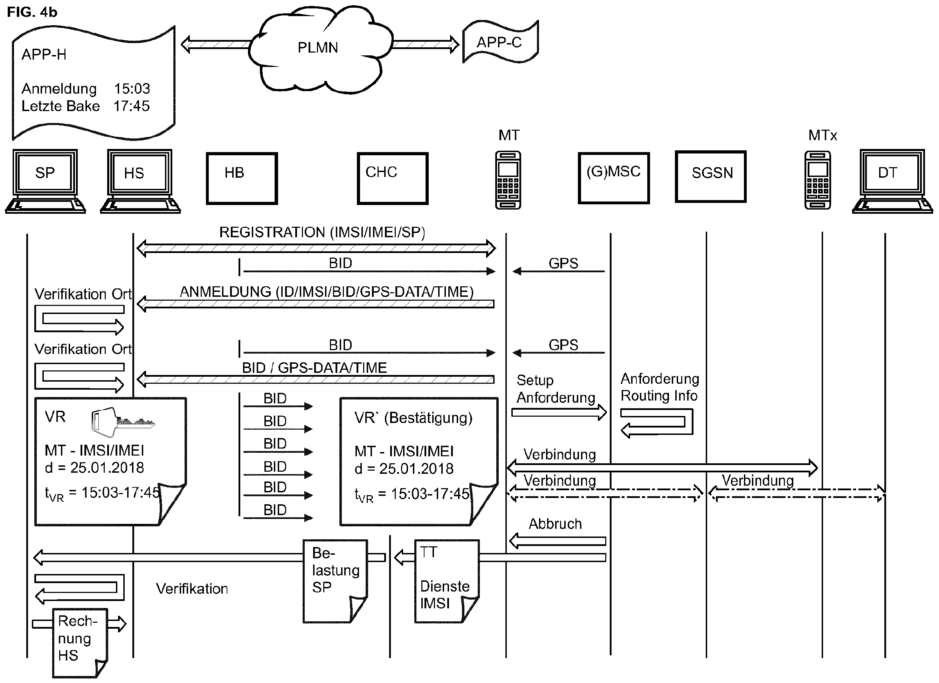

Fig. 4b zeigt den Ablauf des Verfahrens zur Vergabe eines Vouchers VR und zur Verrechnung der Kommunikationskosten für Kommunikationsdienste, die von einem Mobilendgerät MT im Kommunikationssystem von Fig. 4a während der Aufenthaltszeit kostenlos in Anspruch genommen werden können.

Mit schraffierten Pfeilen ist illustriert, dass das Mobilendgerät MT und der Hostserver HS über das Mobilfunknetz PLMN miteinander kommunizieren. Über das Mobilfunknetz PLMN erfolgt die Registrierung des Mobilendgeräts MT beim Hostserver HS. Dazu werden vorzugsweise die IMSI, die IMEI und eine Kennung des zuständigen Serviceproviders SP übermittelt.

Im Gebäude HH oder Eisenbahnzug TH des Hosts sind vorzugsweise zahlreiche Funkbaken HB installiert, die den gesamten Raum abdecken und periodisch Signale mit ihren Kennungen BID aussenden. Das Mobilendgerät MT empfängt diese Kennung BID oder alternativ ein GPS-Signal und überträgt seine Identifikationsdaten ID zusammen mit der Kennungen BID der Funkbake und/oder mit GPS Daten zum Hostserver HS.

Der Hostserver HS prüft anhand übermittelter Kenndaten BID der Funkbaken HB oder mittels der GPS Daten vorzugsweise mehrmals die Position des Mobilendgeräts MT und erstellt für die Zeitdauer t_{VR} des Aufenthalts in einem vorgesehenen Ortsbereich einen Voucher VR, der zum Service-Provider SP und in Kopie vorzugsweise zum Mobilendgerät MT übertragen wird. Die Zeitdauer t_{VR} kann wiederum gemäss einer der oben beschriebenen Massnahmen ermittelt werden. Z.B. endet die Zeitdauer t_{VR} nachdem vom Mobilendgerät MT über eine bestimmte Zeit, z.B. einige Minuten, keine Kennungen BID der Funkbaken HB übertragen wurden. Zusätzlich kann ein Vorlauf und/oder ein Nachlauf bzw. ein Toleranzbereich vorgesehen werden.

Es ist illustriert, dass die Anmeldung des Mobilendgeräts MT mit Übermittlung der Kenndaten BID um 15:03 erfolgt und die Übermittlung von Kenndaten BID der Funkbake HB um 17:45 endet. In diesem Beispiel reist der Anwender, wie im Ausführungsbeispiel von Fig. 2a beschrieben, in dieser Zeit von Zürich nach Genf. Die Berechtigung des Anwenders kann daher anhand der Anwesenheit des Anwenders im Eisenbahnzug HT durch Verwertung der Signale der Funkbaken HB, gegebenenfalls unter Berücksichtigung des Fahrplanes oder durch Prüfung des elektronischen Tickets für die Fahrt von Zürich nach Genf erfolgen.

Besonders einfach ist die Installation von Funkbaken HB, die mit einer Batterie ausgerüstet sind. Alternativ können die Funkbaken HB an ein Stromversorgungsnetz angeschlossen werden, das vorzugsweise zu oder abschaltbar ist. Sofern der Eisenbahnzug auf einem Abstellgleis steht und nicht benutzt wird, werden die Funkbaken HB vorzugsweise abgeschaltet. Sofern die Funkbaken HB hingegen nicht abgeschaltet werden, kann der Hostserver HS anhand der Planung des Rollmaterials feststellen, dass der entsprechende Eisenbahnzug TH nicht in Dienst ist und Kennungen BID seiner Funkbaken HB keine Berechtigung zum kostenlosen Bezug von Kommunikationsdienste anzeigen. In weiteren vorzugsweisen Ausgestaltungen sind die Funkbaken HB vorzugsweise über eine drahtlose Schnittstelle programmierbar, sodass Kennungen BID wahlweise geändert werden können. Vorteilhaft können auch intelligente Funkbaken HB verwendet werden, die z.B. mit Sensoren ausgerüstet sind und gegebenenfalls unterschiedliche Kennungen BID in Abhängigkeit des Vorliegens der Sensorsignale aussenden. Z.B. werden Funkbaken in einen Schlafmodus versetzt, falls über längere Zeit keine optischen oder akustischen Signale wahrgenommen werden. Dabei wird in Intervallen das Vorliegen optischer oder akustischer Signale geprüft und die Funkbake in den Aktivstatus zurückversetzt. Auf diese Weise gelingt es, Energie zu sparen und die Batterien zu schonen.

Die gesammelten Toll Tickets TT, für Kommunikationsdienste, die der Anwender bei seiner Reise von Zürich nach Genf in Anspruch genommen hat, werden in der Folge im Charging Center CHC ausgewertet und den Service-Provider SP belastet, der seinerseits unter Berücksichtigung des Vouchers VR die vom Mobilendgerät MT in Anspruch genommen Kommunikationsdienste dem Hostserver HS belastet.

## Patentansprüche

1. Kommunikationsverfahren für wenigstens ein Mobilendgerät (MT) eines Anwenders, das zum Aufbau von Datenverbindungen oder Gesprächsverbindungen über wenigstens ein mobiles Kommunikationsnetz (PLMN) zu einem Datenendgerät (DT) oder einem Sprachendgerät (ST) geeignet ist und das zur drahtlosen Kommunikation mit einem Hostserver (HS) eines Hosts geeignet ist, **dadurch gekennzeichnet,**
a) **dass** zwischen dem Hostserver (HS) und dem Mobilendgerät (MT) eine drahtlose Kommunikationsverbindung erstellt wird, über die Identifikationsdaten (ID) vom Mobilendgerät (MT) zum Hostserver (HS) übertragen werden;
b) **dass** der Hostserver (HS) einen Voucher (VR) erstellt, in dem wenigstens die Identifikationsdaten (ID) und eine Zeitdauer (t_{VR}) und vorzugsweise eine Kennung des Hostservers (HS) registriert sind;
c) **dass** der Voucher (VR) an den Betreiber des mobilen Kommunikationsnetzes (PLMN) oder an einen Service-Provider (SP) übertragen wird, der für das Mobilendgerät (MT) die Gebührenabrechnung erstellt; und
d) **dass** der Betreiber des mobilen Kommunikationsnetzes (PLMN) oder der Service-Provider (SP) anhand des Vouchers (VR) Kommunikationskosten für Datenverbindungen oder Gesprächsverbindungen des Mobilendgeräts (MT), die während der im Voucher (VR) angegebenen Zeitdauer (t_{VR}) registriert wurden, zumindest teilweise einem der Kennung des Hostservers (HS) zugeordneten Konto belastet.

2. Verfahren nach Anspruch 1, **dadurch gekennzeichnet, dass** der stationäre oder mobile Hostserver (HS), in dem eine Host-Anwendung (APP-H) implementiert ist, und das Mobilendgerät (MT), in dem eine Client-Anwendung (APP-C) implementiert ist, auf einer Anwendungsebene eines WLAN, eines Mobilfunknetzes miteinander kommunizieren oder das Daten über eine optische Schnittstelle übertragen werden.

3. Verfahren nach Anspruch 1 oder 2, **dadurch gekennzeichnet, dass** die zum Hostserver (HS) übertragenen Identifikationsdaten (ID)
a) eine dem Mobilendgerät (MT) oder dem Anwender zugeordnete Kennung (IMEI, IMSI), und/oder
b) Ortsdaten oder/oder eine Hostkennung, und/oder
c) eine dem Service-Provider (SP) zugeordnete Kennung, und/oder
d) einen Zeitstempel
umfassen, nach deren Prüfung oder Registrierung der Voucher (VR) erstellt wird.

4. Verfahren nach Anspruch 1, 2 oder 3, **dadurch gekennzeichnet, dass** Funkbaken (HB) vorgesehen sind, die eine Identifikation (BID) aussenden, welche im Mobilendgerät (MT) erfasst wird und/oder dass das Mobilendgerät (MT) GPS-Signale empfängt und dass das Mobilendgerät (MT) die Funkbaken-Identifikation (BID) und/oder GPS Daten zum Hostserver (HS) sendet, welcher die Funkbaken-Identifikation (BID) Ortsdaten und/oder die GPS Daten als Ortsdaten verwertet und den Voucher (VR) erstellt, falls die Position des Mobilendgeräts (MT) in einem vorgesehenen Servicebereich des Hosts liegt.

5. Verfahren nach einem der Ansprüche 1-4, **dadurch gekennzeichnet,**
a) **dass** der Voucher (VR) vom Hostserver (HS) vereinzelt oder in einer Sammlung an den Betreiber des mobilen Kommunikationsnetzes (PLMN) oder an den Service-Provider (SP) übertragen wird, oder
b) **dass** der Voucher (VR) vom Hostserver (HS) zum Mobilendgerät (MT) und vom Mobilendgerät (MT) an den Betreiber des mobilen Kommunikationsnetzes (PLMN) oder an den Service-Provider (SP) übertragen wird.

6. Verfahren nach einem der Ansprüche 1-5, **dadurch gekennzeichnet, dass** der Hostserver (HS) den Voucher (VR) nach Prüfung des Vorliegens einer im Mobilendgerät (MT) elektronisch gespeicherten Berechtigung, wie elektronischen Kaufbelegs, ausstellt.

7. Verfahren nach einem der Ansprüche 1-6, **dadurch gekennzeichnet, dass** der Hostserver (HS) den Voucher (VR) nach wiederholter Abfrage der Identifikationsdaten (ID) und/oder Ortsdaten, vorzugsweise zu Beginn oder am Ende der Zeitdauer (t_{VR}) und/oder bei Betreten und Verlassen des dem Hostserver (HS) zugeordneten Raumes oder Servicebereich ausstellt.

8. Verfahren einem der Ansprüche 1-7, **dadurch gekennzeichnet, dass** der Hostserver (HS) die Zeitdauer (t_{VR})
a) entsprechend der Zeitdauer einer Servicedienstleistung festlegt, die z.B. von einem Verwaltungsrechner (VR) abgefragt wird, oder
b) entsprechend der Zeitdauer zwischen dem Anmelden des Mobilendgeräts (MT), vorzugsweise beim Betreten des dem Hostserver (HS) zugeordneten Raumes, und dem Abmelden des Mobilendgeräts (MT), vorzugsweise beim Verlassen des dem Hostserver (HS) zugeordneten Raumes, festlegt, oder
c) unter Berücksichtigung von Präsenzzeiten festlegt, die für den Anwender des Mobilendgeräts (MT) gespeichert sind; oder
d) entsprechend der Zeitdauer festlegt, innerhalb der die Position des Mobilendgeräts (MT) im vorgesehenen Servicebereich des Hosts liegt.

9. Verfahren nach einem der Ansprüche 1-8, **dadurch gekennzeichnet, dass** der Anwender des Mobilendgeräts (MT) die Client-Anwendung (APP-C) auf sein Mobilendgerät (MT) herunter lädt und implementiert und nach Erstellen der Verbindung zur Host-Anwendung (APP-H) des Hostservers (HS) eine erstmalige Anmeldung beim Hostserver (HS) mit Angabe von Identifikationsdaten (ID), insbesondere der dem Mobilendgerät (MT) oder dem Anwender zugeordnete Kennung (IMEI, IMSI) vollzieht und der Hostserver (HS) den Anwender oder das Mobilendgerät (MT) registriert und Voucher (VR) nur für registrierte Anwender oder Mobilendgeräte (MT) erstellt.

10. Verfahren nach einem der Ansprüche 1-9, **dadurch gekennzeichnet, dass** der Service-Provider (SP) oder der Betreiber des mobilen Kommunikationsnetzes (PLMN) eine Anwendung (APP-SP; APP-O) verwendet, die es erlaubt, den Voucher (VR) aus Mitteilungen zu extrahieren, die vom Mobilendgerät (MT) übertragen werden.

11. Verfahren nach Anspruch 10, **dadurch gekennzeichnet, dass** der Service-Provider (SP) oder der Betreiber des mobilen Kommunikationsnetzes (PLMN) nach Erhalt des Vouchers (VR) die Identität des Rechnungsempfängers für die Kommunikationskosten für Datenverbindungen oder Gesprächsverbindungen des Mobilendgeräts (MT), die während der im Voucher (VR) angegebenen Zeitdauer (t_{VR}) registriert wurden, durch die Kennung des zentralen Hostservers (HSC) oder die Kennung des Hostservers (HS) ersetzen.

12. Verfahren nach Anspruch 10 oder 11, **dadurch gekennzeichnet, dass** die dem Anwender des Mobilendgeräts (MT) zugeordnete Kennung (IMSI MT) für die im Voucher (VR) angegebene Zeitdauer (t_{VR}) auf die Kennung (IMSI H) des zentralen Hostservers (HSC) oder die Kennung des Hostservers (HS) umgesetzt wird.

13. Kommunikationssystem geeignet zur Durchführung des Kommunikationsverfahrens nach einem der Ansprüche 1-12.

14. Kommunikationssystem nach Anspruch 13, **dadurch gekennzeichnet, dass** WLAN-Beacon (HB), insbesondere Bluetooth Bacon vorgesehen sind, die eine Beacon-Identifikation aussenden, die im Mobilendgerät (MT) erfassbar sind, und/oder dass das Mobilendgerät (MT) zum Empfang von GPS-Signalen vorgesehen ist, und dass die Beacon-Identifikation und/oder GPS-Daten vom Mobilendgerät (MS) zum Hostserver (HS) übertragbar sind, in dem mittels der Beacon-Identifikation und/oder der GPS-Daten Ortsdaten für das Mobilendgeräts (MT) ermittelbar sind und unter Berücksichtigung derer der Voucher (VR) erstellbar ist.

## Claims

1. Communication method for at least one mobile terminal (MT) of a user, which is suitable for setting up data connections or call connections via at least one mobile communication network (PLMN) to a data terminal (DT) or to a voice terminal (ST) and which is suitable for the wireless communication with a host server (HS) of a host, **characterized in**
a) **that** between the host server (HS) and the mobile terminal (MT) a wireless communication link is established, via which identification data (ID) are transferred from the mobile terminal (MT) to the host server (HS);
b) **that** the host server (HS) creates a voucher (VR), in which at least the identification data (ID) and a time period (t_{VR}) and preferably an identifier of the host server (HS) are registered;
c) **that** the voucher (VR) is transmitted to the operator of the mobile communication network (PLMN) or to a service provider (SP), which prepares the statement of charges for the mobile terminal (MT); and
d) **that** the operator of the mobile communication network (PLMN) or the service provider (SP), on the basis of the voucher (VR), debits communication costs for data connections or call connections of the mobile terminal (MT) that were registered during the time period (t_{VR}) indicated in the voucher (VR), at least in part to an account assigned to the identifier of the host server (HS).

2. Method according to claim 1, **characterized in that** the stationary or mobile host server (HS), in which a host-application (APP-H) is implemented, and the mobile terminal (MT), in which a client-application (APP-C) is implemented, communicate on an application layer of a WLAN, a mobile radio network or that data are transmitted via an optical interface.

3. Method according to claim 1 or 2, **characterized in that** the identification data (ID) transmitted to the host server (HS) comprise
a) an identifier (IMEI, IMSI) associated with the mobile terminal (MT) or the user, and/or
b) location data or/or a host identifier, and/or
c) an identifier assigned to the service provider (SP), and/or
d) a timestamp,
after whose verification or registration the voucher (VR) is created.

4. Method according to claim 1, 2 or 3, **characterized in that** radio beacons (HB) are provided, which transmit a radio beacon-identification (BID), which is captured by the mobile terminal (MT) and/or that the mobile terminal (MT) receives GPS-signals and that the mobile terminal (MT) transmits the radio beacon-identification (BID) and/or GPS data to the host server (HS), which uses the radio beacon-identification (BID) and/or GPS data as location data and creates the voucher (VR), if the position of the mobile terminal (MT) is within a predetermined service area of the host.

5. Method according to one of the claims 1-4, **characterized in,**
a) **that** the host server (HS) transmits the vouchers (VR) individually or in batches to the operator of the mobile communication network (PLMN) or to the service provider (SP), or
b) **that** the voucher (VR) is transmitted from the host server (HS) to the mobile terminal (MT) and from the mobile terminal (MT) to the operator of the mobile communication network (PLMN) or to the service provider (SP).

6. Method according to one of the claims 1-5, **characterized in that** the host server (HS) issues the voucher (VR) after verification of the presence of an authorization, such as an electronic proof of purchase, electronically stored in the mobile terminal (MT).

7. Method according to one of the claims 1-6, **characterized in that** the host server (HS) issues the voucher (VR) after repeated interrogation of the identification data (ID) and/or location data, preferably at the beginning or the end of the time period (t_{VR}) and/or upon entering and leaving the room or service area assigned to the host server (HS).

8. Method according to one of the claims 1-7, **characterized in that** the host server (HS) defines the time period (t_{VR})
a) according to a time period relating to a service provided, such as a time period retrieved from an administrative computer (VR); or
b) according to a time period between a login of the mobile terminal (MT), preferably upon entering a room assigned to the host server (HS), and a logoff of the mobile terminal (MT), preferably upon leaving the room assigned to the host server (HS); or
c) by taking into account presence times stored for the user of the mobile terminal (MT); or
d) according to a time period within which the position of the mobile terminal (MT) is located in a service area of the host.

9. Method according to one of the claims 1-8, **characterized in that** the user of the mobile terminal (MT) downloads and implements the clientapplication (APP-C) on his mobile terminal (MT) and, after establishing a connection to the host-application (APP-H) of the host server (HS), makes a first login at the host server (HS) with forwarding identification data (ID), such as the identifier (IMEI, IMSI) assigned to the mobile terminal (MT) or assigned to the user, and the host server (HS) registers the user or the mobile terminal (MT) and issues vouchers (VR) for registered users or registered mobile terminals (MT) only.

10. Method according to one of the claims 1-9, **characterized in that** the service provider (SP) or the operator of the mobile communication network (PLMN) uses an application (APP-SP; APP-O) which allows extracting the voucher (VR) from messages received from the mobile terminal (MT).

11. Method according to claim 10, **characterized in that** the service provider (SP) or the operator of the mobile communication network (PLMN), after receiving the voucher (VR), replaces the identity of the recipient of the bill for the communication costs for data connections or call connections of the mobile terminal (MT), that were registered during the time period (t_{VR}) indicated in the voucher (VR), by an identifier of a centralized host server (HSC) or the identifier of the host server (HS).

12. Method according to claim 10 or 11, **characterized in that** the identifier (IMSI MT) assigned to the user of the mobile terminal (MT) is converted into the identifier (IMSI H) of the centralized host server (HSC) or the identifier of the host server (HS) for the time period (t_{VR}) indicated in the voucher (VR) .

13. Communication system suitable for executing the communication method according to one of the claims 1-12.

14. Communication system according to claim 13, **characterized in that** WLAN-beacons (HB), particularly Bluetooth bacons are provided, which emit a beacon-identification, which is detectable by the mobile terminal (MT), and/or that the mobile terminal (MT) is designed for receiving GPS-signals, and that the beacon-identification and/or GPS-data are transferable from the mobile terminal (MS) to the host server (HS), in which, based on the beacon-identification and/or the GPS-data location data, location data for the mobile terminal (MT) can be determined and a voucher (VR) can be issued based on the determined location data.

## Revendications

1. Procédé de communication pour au moins un terminal mobile (MT) d'un utilisateur, qui est approprié pour établir des connexions de données ou des connexions d'appel via au moins un réseau de communication mobile (PLMN) vers un terminal de données (DT) ou vers un terminal vocal (ST) et qui est approprié pour la communication sans fil avec un serveur hôte (HS) d'un hôte, **caractérisé en ce,**
a) **qu'**entre le serveur hôte (HS) et le terminal mobile (MT), une connexion de communication sans fil est établie, via laquelle des données d'identification (ID) sont transférées du terminal mobile (MT) vers le serveur hôte (HS);
b) **que** le serveur hôte (HS) crée un bon (VR), dans lequel au moins les données d'identification (ID) et une période de temps (t_{VR}) et de préférence un identifiant du serveur hôte (HS) sont enregistrés ;
c) **que** le bon (VR) est transmis à l'opérateur du réseau de communication mobile (PLMN) ou à un fournisseur de services (SP), qui prépare le décompte des frais pour le terminal mobile (MT); et
d) **que** l'opérateur du réseau de communication mobile (PLMN) ou le fournisseur de services (SP), sur la base du bon (VR), débite les coûts de communication pour les connexions de données ou les connexions d'appel du terminal mobile (MT) qui ont été enregistrées pendant la période (t_{VR}), indiquée dans le bon (VR), au moins en partie sur un compte associé à l'identifiant du serveur hôte (HS).

2. Procédé selon la revendication 1, **caractérisé en ce que** le serveur hôte (HS) fixe ou mobile, dans lequel une application hôte (APP-H) est mise en oeuvre, et le terminal mobile (MT), dans lequel une application client (APP-C) est mise en oeuvre, communiquent entre eux sur un niveau d'application d'un WLAN, d'un réseau radio mobile ou que des données sont transmises par une interface optique.

3. Procédé selon la revendication 1 ou 2, **caractérisé en ce que** les données d'identification (ID) transmises à la serveur hôte (HS) comprennent
a) un identifiant (IMEI, IMSI) associé au terminal mobile (MT) ou à l'utilisateur, et/ou
b) des données de localisation ou/ou un identifiant d'hôte, et/ou
c) un identifiant associé au fournisseur de services (SP), et/ou
d) un indicateur de temps
après la vérification ou l'enregistrement duquel le bon (VR) est créé.

4. Procédé selon la revendication 1, 2 ou 3, **caractérisé en ce que** des radiophares (HB) sont prévus, qui transmettent une identification de radiophare (BID), qui est capturée par le terminal mobile (MT) et/ou que le terminal mobile (MT) reçoit des signaux GPS et que le terminal mobile (MT) transmet l'identification de radiophare (BID) et/ou les données GPS au serveur hôte (HS), qui utilise les données d'identification de radiophare (BID) et/ou GPS comme données de localisation et crée le bon (VR), si la position du terminal mobile (MT) est dans une zone de service prédéterminée de l'hôte.

5. Procédé selon une des revendications 1-4, **caractérisé en ce,**
a) **que** le bon (VR) est transmis par le serveur hôte (HS) individuellement ou dans une collection à l'opérateur de réseau de communication mobile (PLMN) ou au fournisseur de services (SP), ou
b) **que** le bon (VR) est transmis du serveur hôte (HS) au terminal mobile (MT) et du terminal mobile (MT) à l'opérateur du réseau de communication mobile (PLMN) et au fournisseur de services (SP) .

6. Procédé selon une des revendications 1-5, **caractérisé en ce que** le serveur hôte (HS) délivre le bon (VR) après avoir vérifié la présence d'une autorisation enregistrée électroniquement dans le terminal mobile (MT), telle qu'un ticket de caisse électronique.

7. Procédé selon une des revendications 1-6, **caractérisé en ce que** le serveur hôte (HS) délivre le bon (VR) après interrogation répétée des données d'identification (ID) et/ou des données de localisation, de préférence au début ou à la fin de la période de temps (t_{VR}) et/ou à l'entrée et à la sortie de la room ou de la zone de service attribuée au serveur hôte (HS).

8. Procédé selon une des revendications 1-7, **caractérisé en ce que** le serveur hôte (HS) définit la période de temps (t_{VR})
a) en fonction d'une période de temps relative à un service fourni, telle qu'une période de temps obtenue à partir d'un ordinateur d'administration (VR); ou
b) en fonction d'une période de temps entre une connexion du terminal mobile (MT), de préférence lors de l'entrée dans une room attribuée au serveur hôte (HS), et une déconnexion du terminal mobile (MT), de préférence lors de la sortie de la room attribuée au serveur hôte (HS); ou
c) en tenant compte des temps de présence enregistrés pour l'utilisateur du terminal mobile (MT); ou
d) en fonction d'une période de temps pendant laquelle la position du terminal mobile (MT) est située dans une zone de service de l'hôte.

9. Procédé selon une des revendications 1-8, **caractérisé en ce que** l'utilisateur des mobiles (MT) télécharge et implémente l'application client (APP-C) sur son terminal mobile (MT) et après avoir établi la connexion à l'application hôte (APP-H) du serveur hôte (HS) effectue un enregistrement initial avec le serveur hôte (HS) en fournissant des données d'identification (ID), notamment l'identifiant (IMEI, IMSI) attribué au terminal mobile (MT) ou à l'utilisateur et le serveur hôte (HS) enregistre l'utilisateur ou le terminal mobile (MT) et crée des bons (VR) uniquement pour les utilisateurs ou les terminaux mobiles (MT) enregistrés.

10. Procédé selon une des revendications 1-9, **caractérisé en ce que** le fournisseur de service (SP) ou l'opérateur du réseau de communication mobile (PLMN) utilise une application (APP-SP ; APP-O) qui permet d'extraire le bon (VR) à partir des messages transmis par le terminal mobile (MT).

11. Procédé selon la revendication 10, **caractérisé en ce que** le fournisseur de services (SP) ou l'opérateur du réseau de communication mobile (PLMN), à la réception du bon (VR), remplace l'identité du destinataire de la facture des coûts de communication pour les connexions de données ou les connexions d'appel du terminal mobile (MT) enregistrées pendant la période de temps (t_{VR}) indiquée dans le bon (VR) par l'identifiant du serveur hôte central (HSC) ou l'identifiant du serveur hôte (HS).

12. Procédé selon la revendication 10 ou 11, **caractérisé en ce que** l'identifiant (IMSI MT) attribué à l'utilisateur du terminal mobile (MT) est converti en l'identifiant (IMSI H) du serveur central hôte (HSC) ou l'identifiant du serveur hôte (HS) pour la période de temps (t_{VR}) spécifiée dans le bon (VR) .

13. Système de communication adapté à la mise en œuvre du procédé de communication selon une des revendications 1-12.

14. Système de communication selon la revendication 13, **caractérisé en ce que** des radiophares WLAN (HB), en particulier des radiophares Bluetooth, sont prévus, qui émettent une identification de radiophare, qui est détectable par le terminal mobile (MT), et/ou **en ce que** le terminal mobile (MT) est conçu pour recevoir des signaux GPS, et que l'identification de balise et/ou les données GPS peuvent être transférées du terminal mobile (MS) au serveur hôte (HS), dans lequel, sur la base de l'identification de balise et/ou des données de localisation GPS, des données de localisation pour le terminal mobile (MT) peuvent être déterminées et un bon (VR) peut être émis sur la base des données de localisation déterminées.
